# EUROPÄISCHE PATENTSCHRIFT

(11) **EP 2 790 933 B1**
(45) Veröffentlichungstag und Bekanntmachung des Hinweises auf die Patenterteilung: **16.03.2016**
(21) Anmeldenummer: 12808704.6
(22) Anmeldetag: 05.12.2012
(51) Int. Cl.: B60C 11/04

(54) **NACHSCHNEIDBARES LAUFSTREIFENPROFIL MIT VERSCHLEISSANZEIGER**
REGROOVABLE TREAD PROFILE WITH WEAR INDICATOR
PROFIL DE BAND DE ROULEMENT RECREUSABLE AVEC INDICATEUR D'USURE

(30) Priorität: 15.12.2011 DE 102011056452
(43) Veröffentlichungstag der Anmeldung: 22.10.2014
(73) Patentinhaber: Continental Reifen Deutschland GmbH, 30165 Hannover (DE)
(72) Erfinder: HOFFMANN, Jens, 40670 Meerbusch (DE); TKOCZ, Tim, 38120 Braunschweig (DE)
(74) Vertreter: Finger, Karsten
(86) Internationale Anmeldenummer: PCT/EP2012/074407
(87) Internationale Veröffentlichungsnummer: WO 2013/087463

(56) Entgegenhaltungen:
- EP-A1- 0 855 290
- WO-A1-02/090094

## Beschreibung

Die Erfindung betrifft ein Laufstreifenprofil eines Fahrzeugluftreifens - insbesondere für Nutzfahrzeuge - mit nachschneidbarem Laufstreifenprofil mit radial erhabenen Profilelementen und mit Rillen, welche jeweils zwei benachbarte Profilelemente voneinander trennen, wobei die Rillen in radialer Richtung R nach innen hin von einem Rillengrund und in axialer Richtung zu beiden Seiten hin von einer die Rillenwand bildenden Profilelementflanke begrenzt sind und wobei in einer oder mehreren Rillen jeweils wenigstens ein Nachschneideindikator zur Anzeige der Nachscheidetiefe ausgebildet ist.

Es ist bekannt, Fahrzeugluftreifen mit einem Laufstreifenprofil auszubilden, bei welchem radial erhabene Profilelemente durch Rillen voneinander beabstandet sind. Die Laufstreifenprofile sind dabei mit einer für den jeweiligen Einsatz optimierten Profiltiefe ausgebildet. Die Rillen sind dabei über ihren wesentlichen Erstreckungsbereich hinweg maximal mit der maximalen Profiltiefe ausgebildet.

Bei Nutzfahrzeugluftreifen ist es bekannt, das Laufstreifenprofil für den Einsatz optimiert unter Einschluss einer zu diesem Zweck optimiert eingestellten Profiltiefe auszubilden. Viele Nutzfahrzeugreifen sind aus mit über den Umfang des Reifens erstreckten Umfangsrillen und mit von diesen getrennten Umfangsrippen oder über den Umfang erstreckten Profilblockreihen ausgebildet, wobei die relativ breiten Umfangsrillen über ihren wesentlichen Erstreckungsbereich über den Umfang hinweg mit maximaler Profiltiefe ausgebildet sind.

Bei derartigen Nutzfahrzeugluftreifen ist es darüber hinaus bekannt, zur Verlängerung der Lebensleistung des Reifens, den Laufstreifen mit zusätzlicher Materialdicke auszubilden, so dass zwischen dem Gürtel des Nutzfahrzeugreifens und der Reifenoberfläche relativ viel Gummimaterial auch unterhalb des Rillenbodens der Umfangsrillen ausgebildet ist. Die für den optimalen Einsatz eines Neureifens bestimmte Profiltiefe wird durch die Ausbildung mit dem wie üblich optimierten Profil mit hierfür geeigneter maximaler Profiltiefe erhalten. Sobald das Laufstreifenprofil soweit abgefahren ist, dass die erforderliche Mindestprofiltiefe verbleibt, können derartige Nutzfahrzeugluftreifen im Profil noch einmal nachgeschnitten werden. Die Nachschneidbarkeit wird am Nutzfahrzeugreifen gekennzeichnet.

Zum Nachschneiden werden die Nutzfahrzeugluftreifen vom Fahrzeug demontiert und mit speziellen Nachschneidewerkzeugen manuell nachgeschnitten. Hierzu muss der Nachschneidende jeweils ein für den jeweiligen Nachschnitt geeignetes Nachschneidewerkzeug benutzen, welches in Abhängigkeit von der jeweiligen Rillenform gewählt wird. Das spezielle Nachschneidewerkzeug wird in die Rille eingeführt und über den Umfang des Nutzfahrzeugluftreifens hinweg gezogen, wobei hierdurch aus dem unteren Rillengrund sowie aus dem unteren Rillenflankenbereich Gummimaterial entfernt wird und vertieft ausgebildete Rillen verbleiben. Der Nachschneidende muss hierzu mit hoher Genauigkeit die Einschneidtiefe einstellen und möglichst konstant halten. Bei zu geringerer Einschneidtiefe wird der Einsatz des Nutzfahrzeugluftreifens nur geringfügig verlängert. Die speziellen Formen zum Nachschneiden erfordern zur Erzielung einer genauen Abformung der gewünschten nachgeschnittenen Umfangsrille außerdem eine Mindestnachschneidtiefe. Ist die Nachschneidtiefe zu klein gewählt, wirkt sich dies negativ auf die nachgeschnittene Querschnittskontur der Umfangsrille ab. Ein zu tiefes Nachschneiden kann die Haltbarkeit und die Einsetzbarkeit des nachgeschnittenen Reifens in ungewünschter Weise beschränken. Daher ist eine hohe Genauigkeit an die einzuhaltende Nachschneidtiefe besonders wichtig. Der Nachschneidende muss die richtige Nachschneideform mit der richtigen Nachschneidekontur für die nachzuschneidende Rille wählen und diese richtig zur in der Umfangsrille positionieren um die gewünschte Nachschneideposition und Nachschneidekontur zu erzielen. Daher wird ein hoher Aufwand durch den Nachschneidenden betrieben, um eine optimale Einschneidtiefe und Positionierung zu erreichen.

Es wurde bereits vorgeschlagen, bei einem derartigen Laufstreifenprofil eines Nutzfahrzeugluftreifens im Rillengrund der Umfangsrille eine kreiszylinderförmige, bohrungsähnliche Vertiefung auszubilden, die in radialer Richtung von einem Vertiefungsgrund begrenzt ist, wobei der Vertiefungsgrund in derjenigen vom Rillengrund aus gemessenen Tiefe ausgebildet ist, welche der Nachschneidetiefe entsprechen soll. Der Vertiefungsgrund ist bei diesem Nachschneideindikator somit als Maß für die einzustellende und einzuhaltende Nachschneidetiefe ausgebildet. Der Nachschneidende nimmt zum Nachschneiden das der Form der Umfangsrille und der nachzuschneidenden Nachschneidtiefe entsprechend geeignete Nachschneidwerkzeug und schneidet die Umfangsrille nach. Als einzigen Bezugspunkt zur Kontrolle und zum Einhalten des Nachschnitts dient der Vertiefungsboden. Der Nachschneidende hat somit zwar eine klare Information darüber, ob er die gewünschte Nachschneidetiefe noch nicht erreicht oder ob er sie bereits erreicht hat. Der kleine Vertiefungsboden im Rillengrund kann leicht überschritten werden und bietet auch keine Informationen über die zu wählende Nachschneideform oder die Qualität der Positionierung des Nachschneidewerkzeuges. Somit ist weiterhin die Genauigkeit des Nachschneidens beschränkt und sehr von der individuellen Herantastungsweise des Nachschneidenden abhängig. Um eine hohe Genauigkeit der Nachschneidequalität sicher zu stellen, ist somit ein zusätzlicher hoher Aufwand und eine sehr vorsichtige kontrollierte Nachschneidetätigkeit erforderlich.

Es wurde auch gelegentlich vorgeschlagen, mit Hilfe von Feineinschnitten im Rillengrund Informationen über die Nachschneidetätigkeit zu vermitteln. Die reine Verwendung von Feineinschnitten im Rillengrund als Nachschneideindikatoren ermöglichen jedoch nicht die vom manuell Nachschneidenden mit üblichen Tiefenmessgeräten sinnvoller Weise gewünschte und üblicherweise durchgeführte, einfache optische Vorabmessung der für die jeweilige Umfangsrille wirklich möglichen Nachschnitttiefe. Der Nachschneidende müsste hier ganz auf allgemeine ihm vorliegende Angaben vertrauen ohne vorherige eigene Kontrolle der für den jeweiligen Nachschnitt des ihm vorliegenden Reifens wirklich richtigen Nachschneidetiefe. Ob möglicher Weise aufgrund von Beschädigungen oder unsachgemäßer Handhabung die wirklich verbleibende Nachschneidetiefe einen Annahmen entspricht, kann er mit seinen einfachen, optischen Messinstrumenten nicht schnell und einfach kontrollieren. Hierzu müsste der Nachschneidende spezielle Messeinrichtungen und Messmethoden sich anschaffen und einsetzen, die über eine reine optische Kontrolle hinausgingen. Derartige Feineinschnitte im Rillengrund bieten auch keine Informationen über die zu wählende Nachschneideform oder die Qualität der Positionierung des Nachschneidewerkzeuges. Somit ist weiterhin die Genauigkeit des Nachschneidens beschränkt und sehr von der individuellen Herantastungsweise des Nachschneidenden abhängig. Um eine hohe Genauigkeit der Nachschneidequalität sicher zu stellen, ist somit ein zusätzlicher hoher Aufwand und eine sehr vorsichtige kontrollierte Nachschneidetätigkeit erforderlich.

**Sowohl aus der** WO 02/090094 A1 als auch aus der EP 0 855 290 A1 **ist ein nachschneidbares Laufstreifenprofil bekannt.**

Der Erfindung liegt die Aufgabe zugrunde, in einfacher Weise ein genaueres, zuverlässiges Nachschneiden zu ermöglichen.

Die Aufgabe wird erfindungsgemäß durch die Ausbildung eines Laufstreifenprofils eines Fahrzeugluftreifens - insbesondere für Nutzfahrzeuge - mit nachschneidbarem Laufstreifenprofil mit radial erhabenen Profilelementen und mit Rillen, welche jeweils zwei benachbarte Profilelemente voneinander trennen, wobei die Rillen in radialer Richtung R nach innen hin von einem Rillengrund und in axialer Richtung zu beiden Seiten hin von einer die Rillenwand bildenden Profilelementflanke begrenzt sind und wobei in einer oder mehreren Rillen jeweils wenigstens ein Nachschneideindikator zur Anzeige der Nachscheidetiefe ausgebildet ist, gemäß den Merkmalen von Anspruch 1 gelöst, bei dem der Nachschneideindikator aus einer quer zur Rille erstreckten Nut mit Nutgrund und die Nut zu beiden Seiten in Erstreckungsrichtung der Rille begrenzenden Nutflanken ausgebildet ist, wobei die Nut mit einer in Erstreckungsrichtung der Rille gemessenen Breite B im Rillengrund zwischen den beiden die Rille begrenzenden Profilelementflanken durch die Rille hindurch und in einer zu beiden Seiten hin ausgebildeten Verlängerung jeweils in der zur jeweiligen Seite hin die Rille begrenzenden Profilelementflanke in radialer Richtung R nach außen erstreckt ausgebildet ist und in einer radialen Position radial innerhalb der Mantelfläche des Reifens endet, wobei der Nutgrund im Erstreckungsbereich des Rillengrundes die Nachschneidetiefe und mit seiner in den senkrecht zur Erstreckungsrichtung der Rille gebildeten Schnittebenen von der einen Profilelementflanke durch den Rillengrund bis zur anderen Profilelementflanke erstreckten Querschnittskontur die Nachschneidekontur für die nachzuschneidende Rille anzeigt.

Auf diese Weise ist in der Rille des Laufstreifenprofils ein Nachschneideindikator ausgebildet, der unmittelbar sowohl die Tiefe des gewünschten Nachschnitts als auch die Kontur des gewünschten Nachschnitts für die nachzuschneidende Rille anzeigt. Die hierzu in der Rille ausgebildete Nut gibt mit dem Verlauf ihres Nutgrundes im Erstreckungsbereich des Rillengrundes unmittelbar die Tiefe des Nachschnittes an und mit dem konturierten Querschnittsverlauf des Nutgrundes in den Schnittebenen senkrecht zur Erstreckungsrichtung der Rille ausgehend von der einen Profilelementflanke über den Rillengrund hinweg bis zur anderen Rillenflanke den Querschnittsverlauf der beim Nachschnitt gewünschten Rille. Die Schnittkontur des Nutgrundes in der ersten Profilelementflanke gibt dabei den gewünschten Querschnittsverlauf der ersten Rillenwand der nachzuschneidenden Rille, der Querschnittsverlauf des Nutgrundes in der zweiten Profilelementflanke den gewünschten Querschnittsverlauf der zweiten Rillenwand der nachzuschneidenden Rille und der Querschnittsverlauf des Nutgrundes im Erstreckungsbereich des Rillengrundes den gewünschten Querschnittsverlauf des Rillengrundes der nachzuschneidenden Rille an. Der Nachschneidende kann, anhand des Querschnittsverlaufes des Nutgrundes in den Schnittebenen senkrecht zur Erstreckungsrichtung der Rille das erforderliche Nachschnittwerkzeug ermitteln, welches genau diesem Querschnittsverlauf des Nutgrundes entspricht. Zum Nachschneiden setzt er das diesem Querschnittsverlauf des Nutgrundes entsprechende Nachschneidewerkzeug in die Nut ein, so dass das Nachschneidemesser in Berührkontakt zum Nutgrund über dessen gesamte Erstreckung - ausgehend von der einen Profilblockelementflanke über den Rillengrund bis zur anderen Profilelementflanke - steht. Er stellt somit durch einfaches Einfügen eines dem Schnittverlauf des Nutgrundes entsprechenden Nachschneidemessers in die Nut das Nachschneidemesser direkt in der richtigen Position im Reifen ein. Durch einfache Relativbewegung des Nachschneidemessers und der Rille zueinander in Längserstreckungsrichtung der Rille erfolgt dann das Nachschneiden der Rille. Der großflächige, formschlüssige Berührkontakt von Nachschneidemesser und Nutgrund sowohl im Bereich der Profilflanken als auch im Rillengrund erschwert darüber hinaus ein versehentliches, zu tiefes Einschneiden in das Material. Das Einfügen bis zum vollständigen Berührkontakt stellt zusätzlich sicher, dass das Nachschneiden mit der gewünschten Profiltiefe und dem gewünschten Querschnitt erfolgt.

Besonders vorteilhaft ist die Ausbildung eines Laufstreifenprofils gemäß den Merkmalen von Anspruch 2, wobei die in den senkrecht zur Erstreckungsrichtung der Rille gebildeten Schnittebenen ausgebildete Querschnittskontur des Nutgrundes und die in den senkrecht zur Erstreckungsrichtung der Rille gebildeten Schnittebenen ausgebildete Querschnittskontur des Rillengrundes formgleich ausgebildet sind. Hierdurch werden gleiche Verformungen aufgrund äußerer Kräfte im Nutgrund und im Rillengrund bewirkt, wodurch die Anfälligkeit für Beschädigungen, z.B. Risse im Nutgrund reduziert wird.

Besonders vorteilhaft ist die Ausbildung eines Laufstreifenprofils gemäß den Merkmalen von Anspruch 3, wobei die in den senkrecht zur Erstreckungsrichtung der Rille gebildeten Schnittebenen ausgebildete Querschnittskontur des Nutgrundes und die in den senkrecht zur Erstreckungsrichtung der Rille gebildeten Schnittebenen ausgebildete Querschnittskontur des Rillengrundes im wesentlichen geradlinig und parallel zueinander ausgebildet sind. Durch diese Ausbildung kann die auftretende Verspannung im Indikator bei externer Krafteinwirkung minimiert werden.

Besonders vorteilhaft ist die Ausbildung eines Laufstreifenprofils gemäß den Merkmalen von Anspruch 4, wobei die in den senkrecht zur Erstreckungsrichtung der Rille gebildeten Schnittebenen ausgebildete Querschnittskontur des Nutgrundes und die in den senkrecht zur Erstreckungsrichtung der Rille gebildeten Schnittebenen ausgebildete Querschnittskontur des Rillengrundes jeweils in radialer Richtung R des Reifens nach außen hin gekrümmt ausgebildet sind. Durch diese Ausbildung kann die mechanische Belastbarkeit bei radial einwirkenden Kräften maximiert werden.

Besonders vorteilhaft ist die Ausbildung eines Laufstreifenprofils gemäß den Merkmalen von Anspruch 5, wobei die Querschnittskontur des Nutgrundes mit einem größeren Krümmungsradius gekrümmt ausgebildet ist als die Querschnittskontur des Rillengrundes. Durch diese Ausbildung wird die mechanische Belastbarkeit des Nutgrundes und auch die der Rillengrundes der nachgeschnittenen Rille gegenüber dem Rillengrund der ursprünglichen Rille erhöht.

Besonders vorteilhaft ist die Ausbildung eines Laufstreifenprofils gemäß den Merkmalen von Anspruch 6, wobei in den senkrecht zur Erstreckungsrichtung der Rille gebildeten Schnittebenen die die Rille begrenzende erste Profilelementflanke unter Einschluss eines Neigungswinkels α zur radialen Richtung R und die die Rille begrenzende zweite Profilelementflanke unter Einschluss eines Neigungswinkels β zur radialen Richtung R nach außen geneigt ausgebildet sind, wobei in den senkrecht zur Erstreckungsrichtung der Rille gebildeten Schnittebenen die Kontur des Nutgrundes in der ersten Profilelementflanke unter Einschluss eines Neigungswinkels α₁ zur radialen Richtung R mit α₁< α und die Kontur des Nutgrundes in der zweiten Profilelementflanke unter Einschluss eines Neigungswinkels β₁ zur radialen Richtung R mit β₁< β erstreckt ausgebildet ist. Hierdurch wird ein einfaches Einführen des Nachschneidewerkzeuges begünstigt.

Besonders vorteilhaft ist ein Verfahren zum Nachschneiden eines mit einem derartigen Laufstreifenprofil ausgebildeten Fahrzeugluftreifen gemäß den Merkmalen von Anspruch 7, bei dem zunächst ein der Querschnittskontur des Nutgrundes korrespondierend ausgebildetes Nachschneidemesser in die Nut soweit eingeführt wird, dass Berührkontakt zwischen dem Nachscheidewerkzeug zum Nutgrund ausgehend von der einen Profilelementflanke über den Rillengrund bis zur anderen Profilelementflanke besteht, und bei dem dann unter Einhaltung dieser radialen Position des Nachschneidemessers das Nachschneidemesser und die Rille längs der Erstreckung der Rille relativ zueinander bewegt und dabei die Rille nachgeschnitten wird. Hierdurch ist ein einfaches, sicheres Nachschneiden möglich unter Nutzung einer einfachen, z.B. optischen Lagekontrolle des Nachschneidewerkzeuges beim erstmaligen Ansetzen.

Die Erfindung wird im Folgenden an Hand der in den Figuren 1 bis 7 dargestellten Ausführungsbeispiele näher erläutert. Hierin zeigen
- Fig.1: einen Umfangsabschnitt eines nachschneidbaren Laufstreifenprofils eines Fahrzeugluftreifens für Nutzfahrzeuge,
- Fig. 2: eine vergrößerte Darstellung einer Umfangsrille des Laufstreifenprofils von Fig. 1 mit Nachschneideindikator in Draufsicht auf das Laufstreifenprofil,
- Fig. 3: die Umfangsrille mit Nachschneideindikator in Schnittdarstellung gemäß Schnitt III-III von Fig.2,
- Fig. 4: die Umfangsrille mit Nachschneideindikator in Schnittdarstellung gemäß Schnitt IV-IV von Fig.2,
- Fig. 5: eine schematische Darstellung zur Erläutern des Nachschneidens an Hand der in den Fig.5a, 5b, 5c und 5d dargestellten Verfahrensschritte,
- Fig. 6: eine Gegenüberstellung eines ersten in den Figuren 5 eingesetzten Nachschneidemessers in Fig.6a und der hierfür entsprechend geformten Nut im Rillengrund in Fig.6b und
- Fig. 7: eine Gegenüberstellung eines alternativ konturierten, zweiten Nachschneidemessers in Fig.7a und der hierfür entsprechend geformten Nut im Rillengrund in Fig.7b.

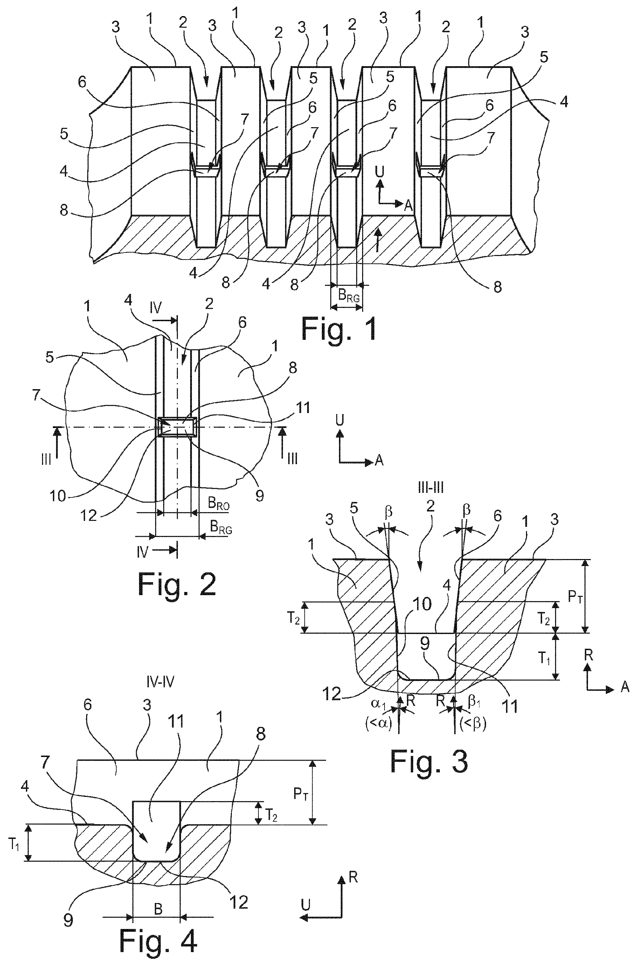

Die Figuren 1 bis 4 zeigen ein nachschneidbares Laufstreifenprofil eines Fahrzeugluftreifens für Nutzfahrzeugreifen, bei welchem radial erhabene über den gesamten Umfang des Fahrzeugluftreifens erstreckte und in Umfangsrichtung U ausgerichtete Profilbänder 1 in axialer Richtung A des Fahrzeugluftreifens nebeneinander angeordnet sind, wobei jeweils zwei axial benachbarte Profilbänder 1 durch eine in Umfangsrichtung U des Fahrzeugluftreifens ausgerichtete und über den gesamten Umfang des Fahrzeugluftreifens erstreckte Umfangsrille 2 axial voneinander beabstandet sind. Die Profilbänder 1 sind in radialer Richtung R nach außen hin jeweils von einer die Bodenkontaktoberfläche bildenden, radial äußeren Oberfläche 3 begrenzt, welche die Mantelfläche des Reifens bilden. Die Umfangsrillen 2 sind in radialer Richtung R nach innen hin durch einen Rillengrund 4 begrenzt, welcher sich über den gesamten Umfang des Fahrzeugluftreifens erstreckt und in Umfangsrichtung U ausgerichtet ist. Die Umfangsrillen 2 sind in axialer Richtung A des Fahrzeugluftreifens jeweils zur einen Seite hin jeweils durch eine Flanke 5 des einen durch die Umfangsrille 2 begrenzten Profilbandes 1 und zur anderen Seite durch eine Flanke 6 des anderen durch die Umfangsrille 2 begrenzten Profilbandes 1 begrenzt. Die Flanken 5 und 6 erstrecken sich jeweils in radialer Richtung R von innen nach außen, ausgehend vom Rillengrund 4 bis zu der radial äußeren Oberfläche 3 des jeweils durch die Flanke 5 bzw. 6 begrenzten Profilbandes 1 und bilden dabei die beiden Rillenwände der Umfangsrille 2.

Die Flanke 5 ist in den senkrecht zur Erstreckungsrichtung der Umfangsrille ausgebildeten Querschnittsebenen jeweils geradlinig ausgebildet und umschließt einen Neigungswinkel α zur radialen Richtung R ein. Die Flanke 6 ist in den senkrecht zur Erstreckungsrichtung der Umfangsrille 2 gebildeten Querschnittsebenen geradlinig ausgebildet und schließt einen Neigungswinkel β zur radialen Richtung R des Fahrzeugluftreifens ein. Die Flanken 5 und 6 sind dabei von radial innen nach radial außen hin in axialer Richtung A gesehen von der Rille 2 wegweisender Richtung geneigt ausgebildet. Die Neigungswinkel α sind mit 1°≤α≤15° ausgebildet. Die Neigungswinkel β sind mit 1°≤β≤15° ausgebildet.

Die Umfangsrille 2 ist im dargestellten Ausführungsbeispiel mit einem Rillengrund 4 ausgebildet, welcher in den senkrecht zur Erstreckungsrichtung der Umfangsrichtung gebildeten Querschnittebenen einen geradlinigen Konturverlauf aufweist. Die Umfangsrille 2 ist in ihrem Rillengrund 4 mit einer senkrecht zur Erstreckungsrichtung der Umfangsrille gemessenen Breite B_{RG} und an ihrem radial äußeren Erstreckungsende in der radial äußeren Mantelfläche zwischen den radial äußeren Oberflächen 3 der die Umfangsrille 2 begrenzenden Profilbänder 1 mit einer Rillenbreite B_{RO} ausgebildet mit B_{RO} > B_{RG}. Die Breite an der radial äußeren Oberfläche B_{RO} ist jeweils das in axialer Richtung A in den Querschnittebenen, welche die Reifenachse beinhalten, gemessene Maß des Abstandes zwischen dem Schnitt der Flanke 5 mit der radial äußeren Oberfläche 3 des die Umfangsrille 2 zur einen Seite begrenzenden Profilbandes 1 und dem Schnitt der Flanke 6 mit der radial äußeren Oberfläche 3 des die Umfangsrille 2 zur anderen Seite begrenzenden Profilbandes 1. Die Breite im Rillengrund ist dabei mit B_{RG} ≥ 3mm ausgebildet. Die Umfangsrille 2 ist längs ihrer Erstreckung in Umfangsrichtung mit der maximalen Profiltiefe P_{T} ausgebildet, welche den radialen Abstand zwischen den radial äußeren, die Mantelfläche bildenden Oberfläche 3 und dem tiefsten Grund des Rillengrundes 4 bildet.

Die Profiltiefe P_{T} ist mit 10mm ≤ P_{T} ≤ 30mm, beispielsweise mit P_{T} = 15mm ausgebildet.

In den Umfangsrillen 2 sind jeweils über den Umfang hinweg verteilt zwei bis sechs, beispielsweise vier Nachschneideindikatoren 7 ausgebildet. In einer Ausführung ist in den Umfangsrillen 2 jeweils nur ein Nachschneideindikator ausgebildet.

Die Nachschneideindikatoren 7 sind dabei jeweils als eine quer zur Haupterstreckungsrichtung der Umfangsrillen 2 und somit quer zur Umfangsrichtung U und somit in axialer Richtung A erstreckte Nut 8 ausgebildet. Die Nut 8 ist mit zwei äußeren Erstreckungsabschnitten 10 und 11 und mit einem mittleren Erstreckungsabschnitt 12 ausgebildet. Die Nut 8 erstreckt sich mit ihrem mittleren Erstreckungsabschnitt 12 über die gesamte Breite des Rillengrundes 4 der Umfangsrille 2. In einer in axialer Richtung zur Flanke 5 hin gerichteten Verlängerung des mittleren Erstreckungsabschnitts 12 erstreckt sich die Nut 8 mit ihrem äußeren Erstreckungsabschnitt 10 in der Flanke 5 des Profilelementes 1 längs der Flanke 5 in radialer Richtung R nach außen bis in einen radial Abstand T₂ vom Rillengrund 4 radial außerhalb des Rillengrundes 4 und endet dort. In einer zur anderen axialen Seite in Richtung der Flanke 6 hin gerichteten Verlängerung des mittleren Erstreckungsabschnitts 12 erstreckt sich die Nut 8 mit ihrem äußeren Erstreckungsabschnitt 11 in der Flanke 6 des Profilelementes 1 längs der Flanke 6 in radialer Richtung R nach außen bis in einen radial Abstand T₂ vom Rillengrund 4 radial außerhalb des Rillengrundes 4 und endet dort.

Die Nut 8 ist mit einem Nutgrund 9 ausgebildet, welcher in dem mittleren Erstreckungsabschnitt 12 in radialer Richtung R im Abstand T₁ vom Rillengrund 4 der Umfangsrille 2 in radialer Richtung R innerhalb der Position des Nutgrundes 4 ausgebildet ist und sich in dem mittleren Erstreckungsabschnitt 12 über eine Erstreckungslänge erstreckt, die geringfügig größer ist als die Breite B_{RG} der Umfangsrille 2 im Rillengrund 4. Der Nutgrund 9 ist in den Querschnittebenen senkrecht zur Haupterstreckungsrichtung der Umfangsrille 2 und somit senkrecht zur Umfangsrichtung U im äußeren Abschnitt 10 der Nut 8 geradlinig erstreckt ausgebildet und schließt einen Neigungswinkel α₁ zur Radialen R ein mit α₁ < α. Der Nutgrund 9 ist in den Querschnittebenen senkrecht zur Haupterstreckungsrichtung der Umfangsrille 2 und somit senkrecht zur Umfangsrichtung U im äußeren Erstreckungsabschnitt 11 geradlinig erstreckt ausgebildet und schließt einen Neigungswinkel β₁ zur radialen Richtung R ein mit β₁ < ß. Die Neigung des Nutgrundes 9 ist dabei im äußeren Erstreckungsabschnitt 10 und im äußeren Erstreckungsabschnitt 11 jeweils so ausgebildet, dass der Nutgrund 9 im jeweiligen äußeren Erstreckungsabschnitt 10 und 11 längs ihrer Erstreckung in radialer Richtung R von innen nach außen in axialer von der Rille wegweisender Richtung geneigt ist. Der Nutgrund 9 im äußeren Erstreckungsabschnitt 10 schneidet die Profilelementflanke 5 im Abstand T₂ oberhalb des Rillengrundes 4. Die Neigung des Nutgrundes 9 im äußeren Erstreckungsabschnitt 11 schneidet die Profilelementflanke 6 im Abstand T₂ oberhalb des Rillengrundes 4.

Der Nutgrund 9 ist im mittleren Erstreckungsabschnitt 12 in den Schnittebenen senkrecht zur Erstreckungsrichtung der Umfangsrille geradlinig parallel zum Rillengrund 4 ausgebildet.

Wie in Fig. 4 zu erkennen ist, ist die Nut in Erstreckungsrichtung der Umfangsrille 2 und somit in Umfangsrichtung U gesehen mit einer Breite B ausgebildet und in Umfangsrichtung U jeweils von zwei im Wesentlichen in radialer Richtung R erstreckten Nutwänden 19 und 20 begrenzt.

Wie in den Figuren dargestellt, sind die Übergänge zwischen dem Rillengrund 4 und der Flanke 5 und der Flanke 6 sowie die Übergänge des Nutgrundes 9 in der Nut 8 zwischen dem mittleren Erstreckungsbereich 12 und den äußeren Erstreckungsbereichen 10 bzw. 11 jeweils abgerundet ausgebildet. Ebenso sind - wie in Fig. 4 dargestellt ist - die Übergänge zwischen Nutgrund 9 und den in Umfangsrichtung U die Nut 8 begrenzenden Nutwänden 19 und 20 und die Übergänge zwischen diesen Nutwänden 19 und 20 und dem Rillengrund 4 abgerundet ausgebildet. Die Nuttiefe T₁ gibt dabei die Nachschneidetiefe an. Der radiale Abstand T₂ vom Rillengrund 4 gibt die verbleibende Profiltiefe eines abgefahrenen Reifens an, bei der ein Nachschneiden erfolgen sollte.

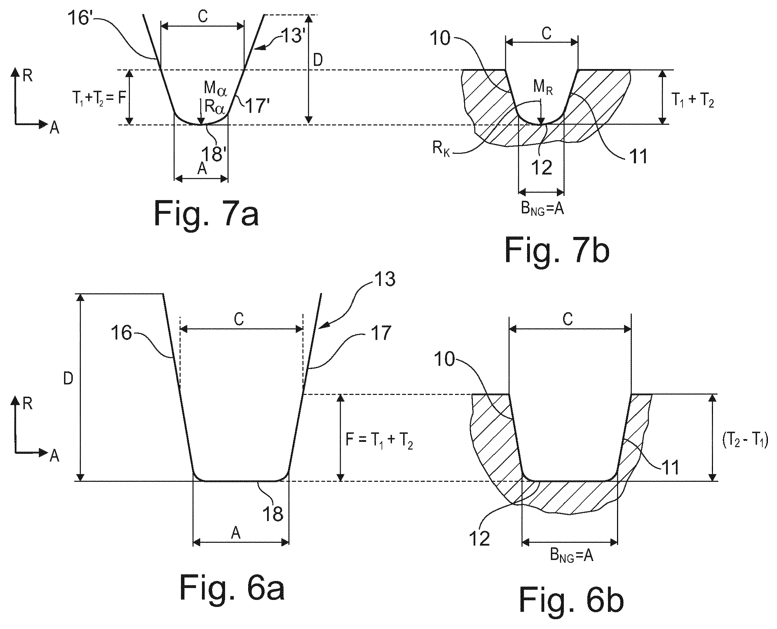

Sobald das Laufstreifenprofil soweit abgefahren ist, dass die verbleibende Restprofiltiefe in der Umfangsrille 2 der dem Abstand T₂ vom Rillengrund 4 entspricht, wird der Fahrzeugluftreifen vom Fahrzeug demontiert und nachgeschnitten. Hierzu wird ein in Fig.6a dargestelltes Nachschneidemesser 13 verwendet, welches in seiner Schnittkontur der Kontur des in Fig.6b dargestellten Nutgrundes 10 entspricht. Das Schneidmesser 13 ist hierzu mit zwei V-förmig zueinander angeordneten, seitlichen Messerschenkeln 16 und 17 und mit einem an dem zur V-Spitze weisenden Ende der beiden Schenkel 16 und 17 ausgebildeten, die beiden Schenkel 16 und 17 miteinander verbindenden, mittleren Messerabschnitt 18 ausgebildet. Der Messerabschnitt 18 ist geradlinig und mit einer Breite A ausgebildet, die der Erstreckungslänge B_{NG} des Nutgrundes - gemessen in Querschnittebenen senkrecht zur Umfangsrichtung U der Umfangsrille 2 - entspricht. Der Schenkel 16 ist geradlinig unter Einschluss eines Neigungswinkels α₁ zu der zum mittleren Messerabschnitt 18 gebildeten Senkrechten geneigt ausgebildet. Der Schenkel 17 des Messers 13 ist geradlinig unter Einschluss eines Neigungswinkels ß₁ zu der zum mittleren Messerabschnitt 18 gebildeten Senkrechten geneigt ausgebildet. Die Schenkel 16 und 17 erstrecken sich vom mittleren Messerabschnitt 18 bis in einen Abstand D vom mittleren Messerabschnitt 18 mit D > (T₂ + T₁).

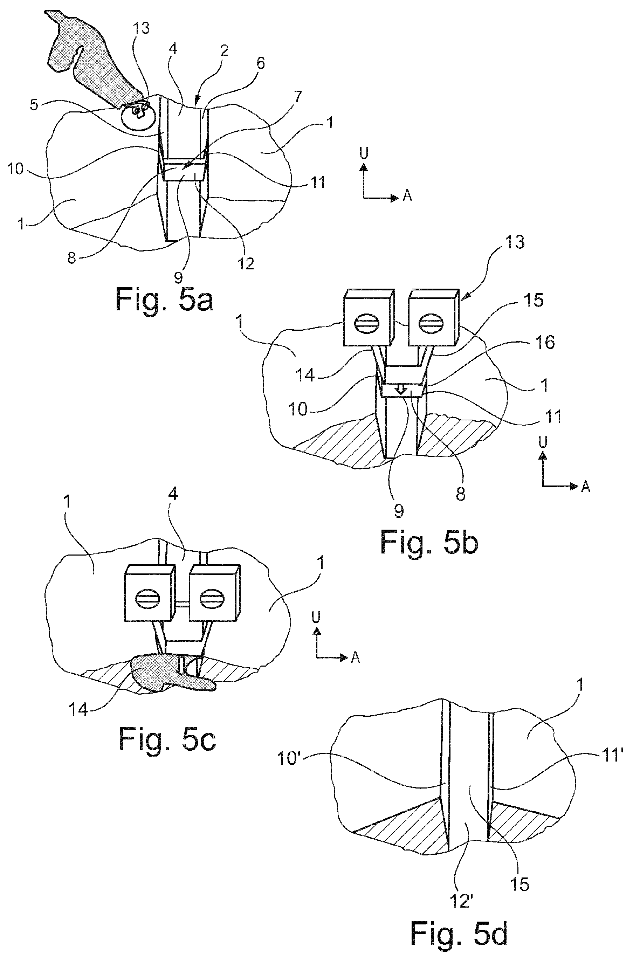

Fig.5 zeigt in den Fig. 5a bis 5d den Ablauf des Nachschneidens. Sobald das Laufstreifenprofil auf die Restprofiltiefe im Abstand T₂ vom Rillengrund 4 abgefahren ist, wird der Reifen vom Fahrzeug demontiert und das Schneidmesser 13 von Fig.6a wird als das dem Nutgrundverlauf der Nut 8 des Nachschneideindikators 7 entsprechende Werkzeug identifiziert. Dieser Zustand ist in Fig.5a dargestellt. Das Schneidmesser 13 wird - wie in Fig.5b dargestellt - in radialer Richtung R von außen nach innen soweit in die Umfangsrille 2 eingefügt, dass es in vollständigem Berührkontakt zum Nutgrund 9 der Nut 8 steht. Dabei steht der mittlere Abschnitt 18 des Schneidmessers 13 längs seiner Erstreckung mit dem mittleren Erstreckungsabschnitt 12 des Nutgrundes 9, der Schenkel 16 längs seiner Erstreckung über die Erstreckungshöhe F =(T₂ + T₁) mit dem Nutgrund 9 im äußeren Erstreckungsabschnitt 10 und der Schenkel 17 längs seiner Erstreckung über die Erstreckungshöhe F = (T₂+ T₁) mit dem Nutgrund 9 im äußeren Erstreckungsabschnitt 11 der Nut 8 in vollständigem Berührkontakt. Das Schneidmessers 13 ist nun formschlüssig in die Nut 8 eingefügt. Das Schneidmesser 13 ist dabei in seiner Erstreckung in Umfangsrichtung der Umfangsrille 2 mit einer Breite ausgebildet, die maximal der Nutbreite B entspricht.

Zum Nachschneiden wird dann das Nachschneidemesser 13 in Umfangsrichtung U des Fahrzeugluftreifens und somit in Erstreckungsrichtung der Umfangsrille 4 bewegt und schabt - wie in Fig. 5c dargestellt ist - dabei sowohl im Rillengrund 4 als auch im Bereich der Flanken 5 und 6 der Umfangsrille 2 so viel Gummimaterial 14 ab, dass der durch die Nut 8 und deren Nutgrund 9 vorgegebene Querschnittverlauf über den gesamten Umfang des Fahrzeugluftreifens hinweg in der vom Nutgrund 9 vorgegebenen radialen Position des Reifens ausgebildet wird. Hierdurch entsteht - wie in Fig. 5d dargestellt ist - eine Umfangsrille 15, welche über den Umfang der Umfangsrille 15 hinweg in radialer Richtung R des Reifens nach innen hin durch einen Rillengrund 12' und zu den beiden benachbarten Profilbändern 1 hin jeweils durch eine Profilelementflanke 10' bzw. 11' begrenzt ist. In den Querschnittebenen senkrecht zur Erstreckungsrichtung der Umfangsrille 15 ist dabei der Rillengrund 12' wie der Nutgrund 9 im mittleren Erstreckungsbereich 12 der Nut 8 vor dem Nachschneiden, die Flanke 10' wie der Nutgrund 9 im äußeren Erstreckungsbereich 10 der Nut 8 vor dem Nachschneiden und die Flanke 11' wie der Nutgrund 9 im äußeren Erstreckungsabschnitt 11 der Nut 8 vor dem Nachschneiden konturiert ausgebildet. Die hierdurch durch Nachschneiden erzielte Umfangsrille 15 hat somit die gewünschte Querschnittkontur und die gewünschte Rillentiefe (T₂ + T₁). Der Rillengrund 12' der nachgeschnittenen Umfangsrille 15 ist dabei im radialen Abstand T₁ unterhalb des ursprünglichen Rillengrundes 4 der Umfangsrille 2 ausgebildet.

In den Figuren 5a bis 5d ist das Nachschneidemesser 13 noch mit an den vom mittleren Abschnitt 18 wegweisenden Enden der Schenkel 16 und 17 mit Haltegriffen zum besseren Halten während des Nachschneidens versehen dargestellt.

Fig.7b zeigt ein alternatives Ausführungsbeispiel des Querschnittverlaufs der Nut 8 in den Querschnittebenen senkrecht zur Umfangsrichtung U und somit der gewünschten nachzuschneidenden Umfangsrille 15. In Fig.7a ist das hierzu erforderliche Schneidmesser 13 dargestellt. In Fig.7b ist dabei analog zur Darstellung von Fig.6b der Zustand dargestellt, in der der Reifen soweit abgefahren ist bis der Reifen nur noch eine Restprofiltiefe aufweist, die dem Abstand T₂ vom Rillengrund 4 der Umfangsrille 2 entspricht. Der Nutgrund 9 ist auch hier im mittleren Abschnitt 12 mit einer in den Schnittebenen senkrecht zur Erstreckungsrichtung der Umfangsrille 4 gemessenen Nutgrundbreite B_{NG} ausgebildet. In diesem Ausführungsbeispiel ist anders als in dem in Fig. 6b dargestellten Ausführungsbeispiel der Nutgrund 9 im mittleren Abschnitt 12 in den Schnittebenen senkrecht zur Umfangsrichtung U nicht geradlinig, sondern um einen radial außerhalb des Nutgrundes 9 im mittleren Abschnitt 12 ausgebildeten Krümmungsmittelpunkt M mit einem Krümmungsradius R_{K} nach außen hin gekrümmt ausgebildet. Der Nutgrund 9 ist - wie in Fig.7b dargestellt - im äußeren Erstreckungsbereich 10 und 11 der Nut 8 wie in Fig.6b geradlinig unter Einschluss eines Neigungswinkels α₁ bzw. β₁ zur radialen Richtung geneigt ausgebildet. Fig.7a zeigt das hierzu geeignete Nachschneidemesser 13' mit den Schenkeln 16' und 17', welche jeweils geradlinig unter Einschluss des Neigungswinkels α₁ bzw. β₁ zur radialen Richtung R geneigt ausgebildet sind. Der mittlere Abschnitt 18', welcher die beiden Schenkel 16' und 17' verbindet, ist mit einer Erstreckungsbreite A = B_{NG} ausgebildet, in welcher der mittlere Abschnitt 18 um einem zwischen den Schenkeln 16' und 17' oberhalb des mittleren Abschnitts 18' ausgebildeten Krümmungsmittelpunkt M_{K} mit dem Krümmungsradius R_{K} nach oben gekrümmt ausgebildet ist. Das Schneidmesser 13' ist analog zu dem in Fig.7b dargestellte Konturverlauf des Nutgrundes 12 ausgebildet. Das Schneidmesser 13' kann in diese mit dem maßgeblichen Querschnitt für die nachzuschneidende Rille 15 ausgebildete Nut 8 in der Umfangsrille 2 eingesetzt werden. Das Nachschneiden erfolgt, wie in den Figuren 5a bis 5d dargestellt und hierzu beschrieben.

In einem nicht dargestellten Ausführungsbeispiel ist auch die Umfangsrille 2 mit einem Rillengrund 4 ausgebildet, welcher - anders als in den Figuren 2 bis 4 dargestellt - in den senkrecht zur Erstreckungsrichtung der Umfangsrille 2 ausgebildeten Schnittebenen nicht geradlinig, sondern um einen oberhalb des Rillengrundes 4 der Umfangsrille 2 ausgebildeten Krümmungsmittelpunkt mit Krümmungsradius nach außen gekrümmt ausgebildet ist. Bei einer derartigen Umfangsrille ist es besonders sinnvoll, auch die nachzuschneidende Umfangsrille 15 mit entsprechender Krümmung des nachzuschneidenden Rillengrundes 12' auszubilden. Dementsprechend wird dann die Nut - wie in Fig.7b dargestellt - mit einem in ihrem mittleren Abschnitt 12 gekrümmtem Nutgrund 9 ausgebildet und zum Nachschneiden ein entsprechend konturiertes Nachschneidemesser 13 - wie in Fig.7a dargestellt ist - verwendet. Bei einem derartigen Ausführungsbeispiel ist besonders sinnvoll, wenn der Krümmungsradius des Rillengrundes 4 geringfügig kleiner ist als der Krümmungsradius des Nutgrundes 9 im mittleren Erstreckungsbereich 12 der Nut 8 und damit des Rillengrundes 12' der nachzuschneidenden Umfangsrille 15.

### Bezugszeichenliste

### (Teil der Beschreibung)

- 1: Profilband
- 2: Umfangsrille
- 3: Radial äußere, die Mantelfläche bildende Oberfläche
- 4: Rillengrund
- 5: Flanke
- 6: Flanke
- 7: Nachschneideindikator
- 8: Nut
- 9: Nutgrund
- 10: Äußerer Abschnitt
- 11: Äußerer Abschnitt
- 12: Mittlerer Abschnitt
- 13: Nachschneidemesser
- 14: Abgeschnittenes Gummmaterial
- 15: Nachgeschnittene Umfangsrille
- 16: Schenkel
- 17: Schenkel
- 18: Abschnitt
- 19: Nutwand
- 20: Nutwand

## Patentansprüche

1. Laufstreifenprofil eines Fahrzeugluftreifens - insbesondere für Nutzfahrzeuge - mit nachschneidbarem Laufstreifenprofil mit radial erhabenen Profilelementen (1) und mit Rillen (2), welche jeweils zwei benachbarte Profilelemente (1) voneinander trennen, wobei die Rillen in radialer Richtung R nach innen hin von einem Rillengrund (4) und in axialer Richtung zu beiden Seiten hin von einer die Rillenwand bildenden Profilelementflanke (5,6) begrenzt sind und wobei in einer oder mehreren Rillen (2) jeweils wenigstens ein Nachschneideindikator (7) zur Anzeige der Nachscheidetiefe ausgebildet ist,
**dadurch gekennzeichnet,**
**dass** der Nachschneideindikator (7) aus einer quer zur Rille (2) erstreckten Nut (8) mit Nutgrund (9) und die Nut (8) zu beiden Seiten in Erstreckungsrichtung der Rille (8) begrenzenden Nutflanken ausgebildet ist, wobei die Nut (8) mit einer in Erstreckungsrichtung der Rille (2) gemessenen Breite B im Rillengrund (4) zwischen den beiden die Rille (2) begrenzenden Profilelementflanken (6,7) durch die Rille (2) hindurch und in einer zu beiden Seiten hin ausgebildeten Verlängerung (10,11) jeweils in der zur jeweiligen Seite hin die Rille (2) begrenzenden Profilelementflanke (5,6) in radialer Richtung R nach außen erstreckt ausgebildet ist und in einer radialen Position radial innerhalb der Mantelfläche des Reifens endet, wobei der Nutgrund (9) im Erstreckungsbereich (12) des Rillengrundes (4) die Nachschneidetiefe und mit seiner in den senkrecht zur Erstreckungsrichtung der Rille (2) gebildeten Schnittebenen von der einen Profilelementflanke (5) durch den Rillengrund (2) bis zur anderen Profilelementflanke (6) erstreckten Querschnittskontur die Nachschneidekontur für die nachzuschneidende Rille (15) anzeigt.

2. Laufstreifenprofil gemäß den Merkmalen von Anspruch 1,
wobei die in den senkrecht zur Erstreckungsrichtung der Rille (2) gebildeten Schnittebenen ausgebildete Querschnittskontur des Nutgrundes (9) und die in den senkrecht zur Erstreckungsrichtung der Rille (2) gebildeten Schnittebenen ausgebildete Querschnittskontur des Rillengrundes (4) formgleich ausgebildet sind.

3. Laufstreifenprofil gemäß den Merkmalen von Anspruch 1 oder 2,
wobei die in den senkrecht zur Erstreckungsrichtung der Rille (2) gebildeten Schnittebenen ausgebildete Querschnittskontur des Nutgrundes (9) und die in den senkrecht zur Erstreckungsrichtung der Rille (2) gebildeten Schnittebenen ausgebildete Querschnittskontur des Rillengrundes (4) im wesentlichen geradlinig und parallel zueinander ausgebildet sind.

4. Laufstreifenprofil gemäß den Merkmalen von Anspruch 1 oder 2,
wobei die in den senkrecht zur Erstreckungsrichtung der Rille (2) gebildeten Schnittebenen ausgebildete Querschnittskontur des Nutgrundes (9) und die in den senkrecht zur Erstreckungsrichtung der Rille (2) gebildeten Schnittebenen ausgebildete Querschnittskontur des Rillengrundes (4) jeweils in radialer Richtung R des Reifens nach außen hin gekrümmt ausgebildet sind.

5. Laufstreifenprofil gemäß den Merkmalen von Anspruch 4,
wobei die Querschnittskontur des Nutgrundes (9) mit einem größeren Krümmungsradius gekrümmt ausgebildet ist als die Querschnittskontur des Rillengrundes (4).

6. Laufstreifenprofil gemäß den Merkmalen von einem der vorangegangenen Ansprüche,
wobei in den senkrecht zur Erstreckungsrichtung der Rille (2) gebildeten Schnittebenen die die Rille (2) begrenzende erste Profilelementflanke (5) unter Einschluss eines Neigungswinkels α zur radialen Richtung R und die die Rille (2) begrenzende zweite Profilelementflanke (6) unter Einschluss eines Neigungswinkels β zur radialen Richtung R nach außen geneigt ausgebildet sind, wobei in den senkrecht zur Erstreckungsrichtung der Rille (2) gebildeten Schnittebenen die Kontur des Nutgrundes (9) in der ersten Profilelementflanke (5) unter Einschluss eines Neigungswinkels α₁ zur radialen Richtung R mit α₁< α und die Kontur des Nutgrundes (9) in der zweiten Profilelementflanke (6) unter Einschluss eines Neigungswinkels β₁ zur radialen Richtung R mit β₁< β erstreckt ausgebildet ist.

7. Verfahren zum Nachschneiden eines mit Laufstreifenprofil gemäß einem der vorangegangenen Ansprüche ausgebildeten Fahrzeugluftreifen, bei dem zunächst ein der Querschnittskontur des Nutgrundes (9) korrespondierend ausgebildetes Nachschneidemesser (13) in die Nut (8) soweit eingeführt wird, dass Berührkontakt zwischen dem Nachscheidewerkzeug (13) zum Nutgrund (9) ausgehend von der einen Profilelementflanke (5) über den Rillengrund (4) bis zur anderen Profilelementflanke (6) besteht, und bei dem dann unter Einhaltung dieser radialen Position des Nachschneidemessers (13) das Nachschneidemesser (13) und die Rille (2) längs der Erstreckung der Rille (2) relativ zueinander bewegt und dabei die Rille (15) nachgeschnitten wird.

## Claims

1. Tread profile of a pneumatic vehicle tyre - in particular for commercial vehicles - comprising a regroovable tread profile with radially raised profile elements (1) and with grooves (2), which respectively separate two adjacent profile elements (1) from one another, wherein the grooves are bounded inwards in the radial direction R by a groove base (4) and on both sides in the axial direction by a profile element flank (5, 6), forming the groove wall, and wherein at least one regrooving indicator (7) for indicating the regrooving depth is respectively formed in one or more grooves (2),
**characterized**
**in that** the regrooving indicator (7) is formed by a recess (8) that is made to extend transversely in relation to the groove (2) and has a recess base (9) and recess flanks bounding the recess (8) on both sides in the direction of extent of the groove (8), wherein the recess (8) is formed with a width B, measured in the direction of extent of the groove (2), in the groove base (4) between the two profile element flanks (6, 7) bounding the groove (2), through the groove (2) and, in an extension (10, 11) formed on both sides, so as to extend outwards in the radial direction R respectively in the profile element flank (5, 6) bounding the groove (2) with respect to the respective side, and ends in a radial position radially inside the lateral surface of the tyre, wherein the recess base (9) in the region of extent (12) of the groove base (4) indicates the regrooving depth and, with the cross-sectional contour thereof that is made to extend in the sectional planes formed perpendicularly to the direction of extent of the groove (2) from the one profile element flank (5) through the groove base (2) to the other profile element flank (6), indicates the regrooving contour for the groove (15) to be regrooved.

2. Tread profile according to the features of Claim 1,
wherein the cross-sectional contour of the recess base (9) formed in the sectional planes formed perpendicularly to the direction of extent of the groove (2) and the cross-sectional contour of the groove base (4) formed in the sectional planes formed perpendicularly to the direction of extent of the groove (2) are formed identically.

3. Tread profile according to the features of Claim 1 or 2,
wherein the cross-sectional contour of the recess base (9) formed in the sectional planes formed perpendicularly to the direction of extent of the groove (2) and the cross-sectional contour of the groove base (4) formed in the sectional planes formed perpendicularly to the direction of extent of the groove (2) are formed substantially straight and parallel to one another.

4. Tread profile according to the features of Claim 1 or 2,
wherein the cross-sectional contour of the recess base (9) formed in the sectional planes formed perpendicularly to the direction of extent of the groove (2) and the cross-sectional contour of the groove base (4) formed in the sectional planes formed perpendicularly to the direction of extent of the groove (2) are formed as outwardly curved respectively in the radial direction R of the tyre.

5. Tread profile according to the features of Claim 4,
wherein the cross-sectional contour of the recess base (9) is formed as curved with a greater radius of curvature than the cross-sectional contour of the groove base (4).

6. Tread profile according to the features of one of the preceding claims,
wherein, in the sectional planes formed perpendicularly to the direction of extent of the groove (2), the first profile element flank (5) bounding the groove (2) is formed as outwardly inclined with an included angle of inclination α in relation to the radial direction R and the second profile element flank (6) bounding the groove (2) is formed as outwardly inclined with an included angle of inclination β in relation to the radial direction R,
wherein, in the sectional planes formed perpendicularly to the direction of extent of the groove (2), the contour of the recess base (9) in the first profile element flank (5) is formed as being made to extend with an included angle of inclination α₁ in relation to the radial direction R, where α₁<α, and the contour of the recess base (9) in the second profile element flank (6) is formed as being made to extend with an included angle of inclination β₁ in relation to the radial direction R, where β₁<β.

7. Method for regrooving a pneumatic vehicle tyre formed with a tread profile according to one of the preceding claims, in which firstly a regrooving cutter (13) formed in a way corresponding to the cross-sectional contour of the recess base (9) is inserted into the recess (8) until there is physical contact between the regrooving tool (13) and the recess base (9) from the one profile element flank (5) over the groove base (4) to the other profile element flank (6), and in which then, while maintaining this radial position of the regrooving cutter (13), the regrooving cutter (13) and the groove (2) are moved in relation to one another along the extent of the groove (2) and the groove (15) is thereby regrooved.

## Revendications

1. Profil de bande de roulement d'un pneu de véhicule - en particulier pour des véhicules utilitaires - avec un profil de bande de roulement recreusable avec des éléments de profil (1) surélevés radialement et avec des gorges (2), qui séparent chaque fois l'un de l'autre deux éléments de profil voisins (1), dans lequel les gorges sont limitées en direction radiale R vers l'intérieur par un fond de gorge (4) et en direction axiale vers les deux côtés par un flanc d'élément de profil (5, 6) formant la paroi de gorge, et dans lequel au moins un indicateur de recreusage (7) est formé respectivement dans une ou plusieurs gorges (2) pour indiquer la profondeur de recreusage, **caractérisé en ce que** l'indicateur de recreusage (7) est formé par une rainure (8) s'étendant transversalement à la gorge (2) avec un fond de rainure (9) et des flancs de rainure limitant la rainure (8) vers les deux côtés dans la direction d'extension de la gorge (8), dans lequel la rainure (8) est formée avec une largeur B mesurée dans la direction d'extension de la gorge (2) en fond de gorge (4) entre les deux flancs d'élément de profil (6, 7) limitant la gorge (2) à travers la gorge (2) et de façon étendue vers l'extérieur en direction radiale R dans un prolongement (10, 11) formé vers les deux côtés chaque fois dans le flanc d'élément de profil (5, 6) limitant la gorge (2) vers le côté respectif, et se termine dans une position radiale radialement à l'intérieur de la surface latérale du pneu, dans lequel le fond de rainure (9) indique dans la région d'extension (12) du fond de gorge (4) la profondeur de recreusage et, avec son contour de section transversale étendu d'un premier flanc d'élément de profil (5) à travers le fond de gorge (2) jusqu'à l'autre flanc d'élément de profil (6) dans les plans de coupe formés perpendiculairement à la direction d'extension de la gorge (2), indique le contour de recreusage pour la gorge à recreuser (15).

2. Profil de bande de roulement selon les caractéristiques de la revendication 1, dans lequel le contour de section transversale du fond de rainure (9) configuré dans les plans de coupe formés perpendiculairement à la direction d'extension de la gorge (2) et le contour de section transversale du fond de gorge (4) configuré dans les plans de coupe formés perpendiculairement à la direction d'extension de la gorge (2) sont de forme identique.

3. Profil de bande de roulement selon les caractéristiques de la revendication 1 ou 2, dans lequel le contour de section transversale du fond de rainure (9) configuré dans les plans de coupe formés perpendiculairement à la direction d'extension de la gorge (2) et le contour de section transversale du fond de gorge (4) configuré dans les plans de coupe formés perpendiculairement à la direction d'extension de la gorge (2) sont essentiellement rectilignes et parallèles l'un à l'autre.

4. Profil de bande de roulement selon les caractéristiques de la revendication 1 ou 2, dans lequel le contour de section transversale du fond de rainure (9) configuré dans les plans de coupe formés perpendiculairement à la direction d'extension de la gorge (2) et le contour de section transversale du fond de gorge (4) configuré dans les plans de coupe formés perpendiculairement à la direction d'extension de la gorge (2) sont chaque fois incurvés vers l'extérieur dans la direction radiale R du pneu.

5. Profil de bande de roulement selon les caractéristiques de la revendication 4, dans lequel le contour de section transversale du fond de rainure (9) est incurvé avec un plus grand rayon de courbure que le contour de section transversale du fond de gorge (4).

6. Profil de bande de roulement selon les caractéristiques de l'une quelconque des revendications précédentes, dans lequel, dans les plans de coupe formés perpendiculairement à la direction d'extension de la gorge (2), le premier flanc d'élément de profil (5) limitant la gorge (2) est réalisé en incluant un angle d'inclinaison α par rapport à la direction radiale R et le deuxième flanc d'élément de profil (6) limitant la gorge (2) est réalisé en incluant un angle d'inclinaison β par rapport à la direction radiale R de façon inclinée vers l'extérieur, dans lequel, dans les plans de coupe formés perpendiculairement à la direction d'extension de la gorge (2), le contour du fond de rainure (9) est formé dans le premier flanc d'élément de profil (5) en incluant un angle d'inclinaison α₁ par rapport à la direction radiale R, avec α₁ < α et le contour du fond de rainure (9) est formé dans le deuxième flanc d'élément de profil (6) en incluant un angle d'inclinaison β₁ par rapport à la direction radiale R, avec β₁ < β.

7. Procédé de recreusage d'un pneu de véhicule réalisé avec un profil de bande de roulement selon l'une quelconque des revendications précédentes, dans lequel on introduit d'abord dans la rainure (8) une lame de recreusage (13) configurée de façon correspondante au contour de section transversale du fond de rainure (9), jusqu'à ce qu'il existe un contact physique entre l'outil de recreusage (13) au fond de rainure (9) en partant d'un flanc d'élément de profil (5) au-dessus du fond de gorge (4) jusqu'à l'autre flanc d'élément de profil (6), et dans lequel on déplace ensuite l'une par rapport à l'autre la lame de recreusage (13) et la gorge (2) le long de l'extension de la gorge (2), en respectant cette position radiale de l'outil de recreusage (13), et on recreuse ainsi la gorge (15).
